# EUROPÄISCHE PATENTSCHRIFT

(11) **EP 2 298 028 B1**
(45) Veröffentlichungstag und Bekanntmachung des Hinweises auf die Patenterteilung: **30.11.2011**
(21) Anmeldenummer: 08785933.6
(22) Anmeldetag: 04.07.2008
(51) Int. Cl.: H05B 33/08

(54) **SCHALTUNGSANORDNUNG UND VERFAHREN ZUM BETREIBEN MINDESTENS EINER ERSTEN UND EINER ZWEITEN LED**
CIRCUIT CONFIGURATION AND METHOD FOR OPERATING AT LEAST ONE FIRST AND ONE SECOND LED
AGENCEMENT DE COMMUTATION ET PROCÉDÉ DE FONCTIONNEMENT D'AU MOINS UNE PREMIÈRE ET UNE DEUXIÈME DIODE ÉLECTROLUMINESCENTE

(43) Veröffentlichungstag der Anmeldung: 23.03.2011
(73) Patentinhaber: Osram AG, 81536 München (DE)
(72) Erfinder: HYING, Ralf, 81827 München (DE)
(86) Internationale Anmeldenummer: PCT/EP2008/058698
(87) Internationale Veröffentlichungsnummer: WO 2010/000333

(56) Entgegenhaltungen:
- CN-A- 101 197 109
- DE-A1-102006 037 342
- US-A1- 2002 105 373
- US-A1- 2003 227 261
- US-A1- 2007 279 104
- US-A1- 2008 116 817

## Beschreibung

### Technisches Gebiet

Die vorliegende Erfindung betrifft eine Schaltungsanordnung zum Betreiben mindestens einer ersten und einer zweiten LED mit einem Operationsverstärker mit einem Plus- und einem Minus-Eingang sowie einem Ausgang, einer Sollwertvorgabevorrichtung, die mit dem Plus-Eingang des Operationsverstärkers gekoppelt ist, zumindest einem ersten und einem zweiten Anschluss für die erste und einem ersten und einem zweiten Anschluss für die zweite LED, wobei der jeweilige erste Anschluss mit einem Anschluss für eine Versorgungsgleichspannung gekoppelt ist, wobei die jeweiligen zweiten Anschlüsse unter Bildung eines Verbindungspunkts miteinander gekoppelt sind, und einem seriell zwischen den Verbindungspunkt der zweiten Anschlüsse und ein Bezugspotential gekoppelten Strommesswiderstand, wobei die über dem Strommesswiderstand abfallende Spannung an den Minus-Eingang des Operationsverstärkers gekoppelt ist. Sie betrifft überdies ein entsprechendes Verfahren zum Betreiben mindestens einer ersten und einer zweiten LED.

### Stand der Technik

Derartige Schaltungsanordnungen werden beispielsweise eingesetzt in Microdisplay-Anwendungen für Front- und Rückprojektion. Dabei ist es nötig, den durch die LEDs fließenden Strom und damit das von den LEDs abgegebene Licht im µs-Bereich ein- und auszuschalten. Dabei kann es in Projektionssystemen, die nicht im absoluten High-EndBereich angesiedelt sind, sinnvoll sein, die verschiedenen Kanäle, die verschiedenen Farben entsprechen, zeitlich nacheinander, d. h. sequentiell, anzusteuern. Dadurch lassen sich die Gerätekosten deutlich senken, da nicht pro Kanal eine Stromquelle vorgesehen werden muss, sondern insgesamt eine Stromquelle für alle Kanäle verwendet werden kann. Bevorzugt ist zum Erreichen einer möglichst optimalen Lichtausbeute diese Stromquelle für sehr schnelle Schaltvorgänge ausgelegt.

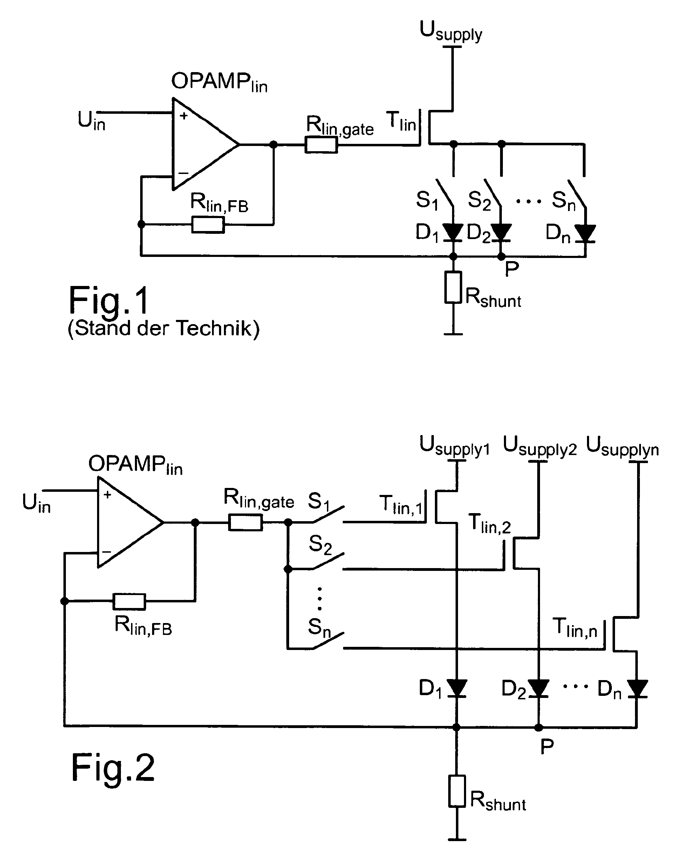

Fig. 1 zeigt in schematischer Darstellung eine aus dem Stand der Technik bekannte, gattungsgemäße Schaltungsanordnung. Dabei kommt als Stromquelle ein Linearregler zum Einsatz. Dieser umfasst den Operationsverstärker OPAMPₗᵢₙ, einen zwischen dem Ausgang des Operationsverstärkers O-PAMPₗᵢₙ und seinen Minus-Eingang angeordneten Rückkoppelwiderstand R_{lin,FB} sowie einen seriell zwischen dem Ausgang des Operationsverstärkers OPAMPₗᵢₙ und einem zur Stromstärkeeinstellung verwendeten, linear betriebenen Leistungstransistor Tₗᵢₙ angeordneten Widerstand R_{lin,gate}. Der Plus-Eingang des Operationsverstärkers OPAMPₗᵢₙ ist mit einer Steuerspannung Uᵢₙ gekoppelt, die festlegt, wie hoch der vom Transistor Tₗᵢₙ freizugebende, durch den jeweils geschlossenen Schalter S₁ bis Sₙ und durch die jeweils zugeordnete Diode D₁ bis Dₙ fließende Strom ist. Die Schalter S₁ bis Sₙ werden in Sättigung betrieben und müssen den vollen, durch die LEDs fließenden Strom schalten können. Anodenseitig sind die Dioden D₁ bis Dₙ mit einer gemeinsamen Versorgungsspannung U_{supply} koppelbar, während kathodenseitig zwischen die Kathode jeder Diode D₁ bis Dₙ und ein Bezugspotential ein Strommesswiderstand Rₛₕᵤₙₜ gekoppelt ist. Die am Strommesswiderstand Rₛₕᵤₙₜ abfallende Spannung wird an den Minuseingang des Operationsverstärkers OPAMPₗᵢₙ gekoppelt.

Die Schalter S1 bis Sₙ werden von einer nicht dargestellten Steuerschaltung sequentiell eingeschaltet.

Nachteilig an der in Fig. 1 dargestellten Schaltungsanordnung ist der Umstand, dass sie aufwändige Maßnahmen zur Wärmeableitung erfordert.

US 2002 105 373 A1 zeigt eine Schaltungsanordnung bzw. ein Verfahren nach dem Präambel von Anspruch 1 bzw. 12.

### Darstellung der Erfindung

Die Aufgabe der vorliegenden Erfindung liegt deshalb darin, eine gattungsgemäße Schaltungsanordnung beziehungsweise ein gattungsgemäßes Verfahren derart weiterzubilden, dass die zur Wärmeableitung zu treffenden Maßnahmen einfacher und damit kostengünstiger ausfallen können.

Diese Aufgabe wird gelöst durch eine Schaltungsanordnung mit den Merkmalen von Patentanspruch 1 sowie durch ein Verfahren mit den Merkmalen von Patentanspruch 12.

Der Erfindung liegt die Erkenntnis zugrunde, dass diese Aufgabe gelöst werden kann, wenn in jedem LED-Zweig ein Leistungstransistor vorgesehen wird, der über jeweils zugehörige Schalter S₁ bis Sₙ als Längsregeltransistor für den Linearregler verwendet wird. Dabei können für die Schalter S₁ bis Sₙ Kleinsignaltransistoren eingesetzt werden, da diese lediglich für den in die Steuerelektrode der Leistungstransistoren T_{lin,1} bis T_{lin,n} fließenden Strom ausgelegt sein müssen. Das sequentielle Schalten der Schalter S₁ bis Sₙ kann mit dem gleichen Timing und aus der gleichen Quelle wie im Stand der Technik erfolgen. Während im Stand der Technik die wesentliche, ein aufwändiges thermisches Design zur Folge habende Verlustleistung im Wesentlichen am Längsregeltransistor Tₗᵢₙ entsteht und damit zentral an einem Punkt, verteilt sich diese Verlustleistung bei einer erfindungsgemäßen Schaltungsanordnung an mehreren Punkten und zwar an den Leistungstransistoren T_{lin,1}, T_{lin,2} usw. Ein weiterer bedeutender Vorteil ergibt sich daraus, dass im jeweils aktiven Zweig jeweils immer nur ein Transistor liegt, während im Stand der Technik im jeweils aktiven Zweig zwei. Transistoren vom Strom durch die LED durchflossen wurden. Hält man sich vor Augen, dass die Kollektor-Emitter-Sättigungsspannung eines der Schalter S₁ bis Sₙ ca. 500 mV beträgt und die die LEDs durchfließenden Ströme bei bis zu 30 A liegen können, so wird deutlich, welche gewaltigen Mengen an Verlustleistung in den Schaltern S₁ bis Sₙ erzeugt werden. Bei Verwendung von drei LEDs beziehungsweise LED-Arrays, benötigt die aus dem Stand der Technik bekannte Schaltungsanordnung überdies vier Leistungstransistoren, während die erfindungsgemäße Schaltungsanordnung lediglich mit drei Leistungstransistoren auskommt.

Damit ermöglicht die vorliegende Erfindung nicht nur deutlich reduzierte Maßnahmen zur Ableitung der Verlustleistung, sie zeichnet sich überdies durch einen deutlich höheren Wirkungsgrad aus und senkt die Bauteilkosten. Aufgrund der Reduktion der Verlustleistung ist überdies mit einer längeren Lebensdauer der Schaltungsanordnung zu rechnen.

Bei einer bevorzugten Ausführungsform ist die erste LED zwischen die Bezugselektrode des ersten analog betreibbaren Transistors und das Bezugspotential und die zweite LED zwischen die Bezugselektrode des zweiten analog betreibbaren Transistors und das Bezugspotential gekoppelt. Dadurch entsteht eine so genannten Common-Cathode-Anordnung. Alternativ kann vorgesehen sein, dass die erste LED zwischen einen Anschluss für eine Versorgungsspannung und die Arbeitselektrode des ersten analog betreibbaren Transistors und die zweite LED zwischen einen Anschluss für eine Versorgungsspannung und die Arbeitselektrode des zweiten analog betreibbaren Transistors gekoppelt ist. Hierdurch ergibt sich eine so genannte Common-Anode-Anordnung.

Bevorzugt ist der erste und/oder der zweite elektronische Schalter als Kleinsignaltransistor ausgeführt. Dies wird dadurch ermöglicht, dass der erste und der zweite elektronische Schalter lediglich den Gate-Strom für die bevorzugt als Feldeffekttransistoren realisierten analog betreibbaren Transistoren bereitstellen muss. Dadurch können die Bauteilkosten weiter reduziert werden.

Der erste und/oder der zweite analog betreibbare Transistoren werden hingegen bevorzugt als Leistungstransistoren ausgeführt.

Besonders bevorzugt sind der erste und der zweite analog betreibbare Transistor in einem räumlichen Abstand von mehr als 2 cm, insbesondere einem Abstand von mehr als 5 cm, montiert. Dies resultiert darin, dass die Verlustleistung an mindestens zwei unterschiedlichen Orten entsteht, die von der Verlustleistung des jeweils anderen Transistors deutlich weniger beeinflusst werden, als wenn die beiden analog betriebbaren Transistoren unmittelbar nebeneinander montiert werden. Dadurch lassen sich die Maßnahmen zur Ableitung der Verlustleistung weiter reduzieren. Wird beispielsweise ein gemeinsamer Kühlkörper über den ersten und den zweiten analog betreibbaren Transistor montiert, so ergibt sich aufgrund des Abstands eine große Fläche des Kühlkörpers, die für eine gute Wärmeableitung sorgt.

Zwischen den Ausgang und den Minus-Eingang des Operationsverstärkers ist bevorzugt ein Koppelnetzwerk gekoppelt. Dieses dient dazu, eine geeignete Verstärkung des Operationsverstärkers einzustellen.

Bei einer vereinfachten Ausführungsform sind mindestens zwei Anschlüsse zum Anschließen einer Versorgungsgleichspannung miteinander gekoppelt. Dies entspricht im Wesentlichen der Vorgehensweise wie im Stand der Technik und bietet den Vorteil, dass nur eine Versorgungsgleichspannung bereitgestellt werden muss. Besonders bevorzugt ist es jedoch, wenn mindestens zwei Anschlüsse zum Anschließen einer Versorgungsgleichspannung nicht miteinander gekoppelt sind, so dass sie mit unterschiedlichen Versorgungsgleichspannungen koppelbar sind. Dadurch lässt sich berücksichtigen, dass jede Diode üblicherweise eine unterschiedliche Flussspannung aufweist. So beträgt die Flussspannung einer roten LED U_{Frot} ungefähr 4 V, die einer blauen LED U_{Fblau} ungefähr 6 V und die einer grünen LED U_{Fgrün} ebenfalls ca. 6 V. Wenn wie im Stand der Technik nur eine Versorgungsspannung zur Verfügung steht, müsste diese auf ca. 6,5 V ausgelegt sein. Wenn nun im Rahmen des sequentiellen Schaltens die rote LED eingeschaltet werden soll, so müsste an dem ihr zugeordneten, analog betreibbaren Transistor eine Spannung von mindestens 2 V abfallen, um der roten LED eine entsprechende Flussspannung bereitzustellen. Bei einem durch die rote LED fließenden Strom von 30 A ergibt sich dadurch eine zusätzliche Verlustleistung von 60 W, die bei der genannten bevorzugten Ausführungsform eingespart werden kann, wenn die den LEDs zugeordneten Anschlüsse zum Anschließen einer Versorgungsspannung mit Versorgungsspannungen gekoppelt werden, die auf die jeweilige LED abgestimmt sind. Im vorliegenden Fall würde beispielsweise der einer roten LED zugeordnete Anschluss mit einer Versorgungsspannung von 4,5 V gekoppelt werden, während die einer roten und einer blauen LED zugeordneten Anschlüsse bevorzugt gemeinsam mit einer Versorgungsspannung von 6,5 V gekoppelt werden.

Selbstverständlich kann die mindestens eine erste LED ein erstes LED-Modul und die mindestens eine zweite LED ein zweites LED-Modul mit jeweils einer Vielzahl von LEDs darstellen. Bevorzugt umfasst dabei zumindest ein LED-Modul eine Vielzahl von Einzelchips mit jeweils mindestens einer LED, wobei die Einzelchips bevorzugt parallel und/oder in Serie geschaltet sind.

Weitere bevorzugte Ausführungsformen ergeben sich aus den Unteransprüchen.

Die mit Bezug auf die erfindungsgemäße Schaltungsanordnung vorgestellten bevorzugten Ausführungsformen und deren Vorteile gelten entsprechend, soweit anwendbar, für das erfindungsgemäße Verfahren.

### Kurze Beschreibung der Zeichnung(en)

Im Nachfolgenden werden nunmehr Ausführungsbeispiele einer erfindungsgemäßen Schaltungsanordnung unter Bezugnahme auf die beigefügten Zeichnungen näher beschrieben. Es zeigen:
- Fig. 1: eine aus dem Stand der Technik bekannte gattungsgemäße Schaltungsanordnung;
- Fig. 2: ein erstes Ausführungsbeispiel einer erfindungsgemäßen Schaltungsanordnung; und
- Fig. 3: ein zweites Ausführungsbeispiel einer erfindungsgemäßen Schaltungsanordnung.

### Bevorzugte Ausführung der Erfindung

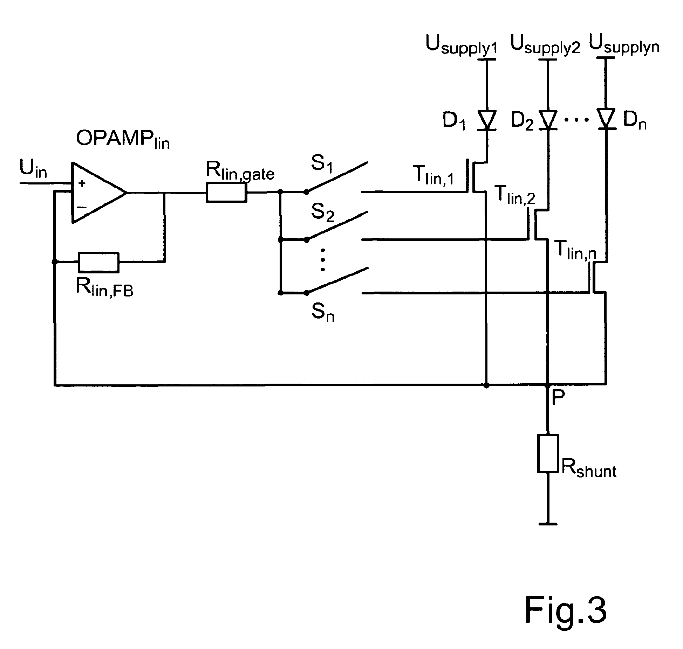

Die mit Bezug auf Fig. 1 eingeführten Bezugszeichen werden, sofern sie gleiche oder ähnliche Bauteile betreffen, für die in den Figuren 2 und 3 dargestellten Ausführungsformen übernommen. Diese werden deshalb nicht nochmals eingeführt, vielmehr wird lediglich auf die Unterschiede zur gattungsgemäßen Schaltungsanordnung eingegangen.

In dem in Fig. 2 dargestellten, ersten Ausführungsbeispiel einer erfindungsgemäßen Schaltungsanordnung sind die Kathoden der Dioden D₁ bis Dₙ unter Bildung eines Verbindungspunkts P miteinander verbunden. Zwischen der Anode jeder Diode D₁ bis Dₙ und einem der jeweiligen Diode zugeordneten Anschluss für eine Versorgungsspannung U_{supply1} bis U_{supplyn} ist die Strecke Arbeitselektrode-Bezugselektrode eines Leistungstransistors T_{lin,1} bis T_{lin,n} angeordnet. Die Steuerelektrode jedes Leistungstransistors T_{lin,1} bis T_{lin,n} ist über einen jeweils zugeordneten Schalter S₁ bis Sₙ mit dem Ausgang des Operationsverstärkers OPAMPₗᵢₙ des Linearreglers koppelbar. Eine nicht dargestellte Steuervorrichtung steuert die Schalter S₁ bis Sₙ nach Bedarf sequentiell an. Die Schalter S₁ bis Sₙ sind als Kleinsignaltransistoren realisiert.

Fig. 3 zeigt in schematischer Darstellung eine zweite Ausführungsform einer erfindungsgemäßen Schaltungsanordnung, bei der die Dioden D₁ bis Dₙ zwischen einem jeweils zugeordneten Anschluss für eine Versorgungsspannung U_{supply1} bis U_{supplyn} und der Arbeitselektrode des jeweils zugeordneten Leistungstransistors T_{lin,1} bis T_{lin,n} angeordnet sind. Wenn die Anoden der Dioden D₁ bis Dₙ mit einer gemeinsamen Versorgungsspannung gekoppelt werden, d. h. U_{supply1} bis U_{supplyn} sind identisch, dann entsteht eine so genannte Common-Anode-Anordnung. Bevorzugt sind jedoch an die Anschlüsse unterschiedliche Versorgungsspannungen U_{supply1} bis U_{supplyn} gekoppelt, die auf die Flussspannung der jeweiligen Diode D₁ bis Dₙ abgestimmt sind.

Die der Übersichtlichkeit wegen als einzelne Dioden dargestellten LEDs D₁ bis Dₙ können selbstverständlich ganze LED-Arrays mit jeweils einer Vielzahl von Leuchtdioden darstellen.

## Patentansprüche

1. Schaltungsanordnung zum Betreiben mindestens einer ersten (D1) und einer zweiten LED (D2) mit
- einem Operationsverstärker (OPAMPₗᵢₙ) mit einem Plus- und einem Minus-Eingang sowie einem Ausgang;
- einer Sollwertvorgabevorrichtung (Uᵢₙ), die mit dem Plus-Eingang des Operationsverstärkers (OPAMPₗᵢₙ) gekoppelt ist;
- zumindest einem ersten und einem zweiten Anschluss für die erste (D1) und einem ersten und einem zweiten Anschluss für die zweite LED (D2), wobei der jeweilige erste Anschluss mit einem Anschluss für eine Versorgungsgleichspannung (U_{supply1}; U_{supply2}) gekoppelt ist, wobei die jeweiligen zweiten Anschlüsse unter Bildung eines Verbindungspunkts (P) miteinander gekoppelt sind; und
- einen ersten analog betreibbaren Transistor (T_{lin,1}) mit einer Steuerelektrode, einer Bezugselektrode und einer Arbeitselektrode, dessen Strecke Arbeitselektrode-Bezugselektrode seriell zum ersten und zweiten Anschluss für die erste LED (D1) zwischen einen Anschluss für eine Versorgungsgleichspannung (U_{supply1}; U_{supply2}) und das Bezugspotential gekoppelt ist;
- einen zweiten analog betreibbaren Transistor (T_{lin,2}) mit einer Steuerelektrode, einer Bezugselektrode und einer Arbeitselektrode, dessen Strecke Arbeitselektrode-Bezugselektrode seriell zum ersten und zweiten Anschluss für die zweite LED (D2) zwischen einen Anschluss für eine Versorgungsgleichspannung (U_{supply1}; U_{supply2}) und das Bezugspotential gekoppelt ist;
**dadurch gekennzeichnet,**
**dass** die Schaltungsanordnung weiterhin umfasst:
- einen ersten elektronischen Schalter (S1), der seriell zwischen den Ausgang des Operationsverstärkers (OPAMPₗᵢₙ) und die Steuerelektrode des ersten analog betreibbaren Transistors (T_{lin,2}) gekoppelt ist; und
- einen zweiten elektronischen Schalter (S2), der seriell zwischen den Ausgang des Operationsverstärkers (OPAMPₗᵢₙ) und die Steuerelektrode des zweiten analog betreibbaren Transistors (T_{lin,2}) gekoppelt ist.
- einem seriell zwischen den Verbindungspunkt (P) der zweiten Anschlüsse und ein Bezugspotential gekoppelten Strommesswiderstand (Rₛₕᵤₙₜ), wobei die über dem Strommesswiderstand (Rₛₕᵤₜ) abfallende Spannung an den Minus-Eingang des Operationsverstärkers (OPAMPₗᵢₙ) gekoppelt ist;

2. Schaltungsanordnung nach Anspruch 1,
**dadurch gekennzeichnet,**
**dass** die erste LED (D1) zwischen die Bezugselektrode des ersten analog betreibbaren Transistors (T_{lin,1}) und das Bezugspotential und die zweite LED (D2) zwischen die Bezugselektrode des zweiten analog betreibbaren Transistors (T_{lin,2}) und das Bezugspotential gekoppelt ist.

3. Schaltungsanordnung nach Anspruch 1,
**dadurch gekennzeichnet,**
**dass** die erste LED (D1) zwischen einem Anschluss für eine Versorgungsspannung und die Arbeitselektrode des ersten analog betreibbaren Transistors (T_{lin,1}) und die zweite LED (D2) zwischen einen Anschluss für eine Versorgungsspannung und die Arbeitselektrode des zweiten analog betreibbaren Transistors (T_{lin,2}) gekoppelt ist.

4. Schaltungsanordnung nach einem der vorhergehenden Ansprüche,
**dadurch gekennzeichnet,**
**dass** der erste (S1) und/oder der zweite elektronische Schalter (S2) als Kleinsignaltransistor ausgeführt ist.

5. Schaltungsanordnung nach einem der vorhergehenden Ansprüche,
**dadurch gekennzeichnet,**
**dass** der erste (T_{lin,1}) und/oder der zweite analog betreibbare Transistor (T_{lin,2}) als Leistungstransistor ausgeführt ist.

6. Schaltungsanordnung nach einem der vorhergehenden Ansprüche,
**dadurch gekennzeichnet,**
**dass** der erste (T_{lin,1}) und der zweite analog betreibbare Transistor (T_{lin,2}) in einem räumlichen Abstand von mehr als 2 Zentimetern, insbesondere in einem Abstand von mehr als 5 Zentimetern, montiert sind.

7. Schaltungsanordnung nach einem der vorhergehenden Ansprüche,
**dadurch gekennzeichnet,**
**dass** zwischen den Ausgang und den Minus-Eingang des Operationsverstärkers (OPAMPₗᵢₙ) ein Rückkoppelnetzwerk gekoppelt (R_{lin,FB}) ist.

8. Schaltungsanordnung nach einem der vorhergehenden Ansprüche,
**dadurch gekennzeichnet,**
**dass** mindestens zwei Anschlüsse (U_{suppiy}) zum Anschlie-βen einer Versorgungsgleichspannung miteinander gekoppelt sind.

9. Schaltungsanordnung nach einem der vorhergehenden Ansprüche,
**dadurch gekennzeichnet,**
**dass** mindestens zwei Anschlüsse zum Anschließen einer Versorgungsgleichspannung (U_{supply1}, U_{supply2}) nicht miteinander gekoppelt sind, so dass sie mit unterschiedlichen Versorgungsgleichspannungen (U_{supply1}, U_{supply2}) koppelbar sind.

10. Schaltungsanordnung nach einem der vorhergehenden Ansprüche,
**dadurch gekennzeichnet,**
**dass** die mindestens eine erste LED (D1) ein erstes LED-Modul und die mindestens eine zweite LED (D2) ein zweites LED-Modul darstellt.

11. Schaltungsanordnung nach Anspruch 10,
**dadurch gekennzeichnet,**
**dass** zumindest ein LED-Modul eine Vielzahl von Einzelchips mit jeweils mindestens einer LED (D1) umfasst, die parallel und/oder in Serie geschaltet sind.

12. Verfahren zum Betreiben mindestens einer ersten (D1) und einer zweiten LED (D2) an einer Schaltungsanordnung mit einem Operationsverstärker (OPAMPₗᵢₙ) mit einem Plus- und einem Minus-Eingang sowie einem Ausgang; einer Sollwertvorgabevorrichtung (Uᵢₙ), die mit dem Plus-Eingang des Operationsverstärkers (OPAMPₗᵢₙ) gekoppelt ist; zumindest einem ersten und einem zweiten Anschluss für die erste (D1) und einem ersten und einem zweiten Anschluss für die zweite LED (D2), wobei der jeweilige erste Anschluss mit einem Anschluss für eine Versorgungsgleichspannung (U_{supply1}; U_{supply2}) gekoppelt ist, wobei die jeweiligen zweiten Anschlüsse unter Bildung eines Verbindungspunkts (P) miteinander gekoppelt sind; und einem Strommesswiderstand (Rₛₕᵤₙₜ), wobei die über dem Strommesswiderstand (Rₛₕᵤₙₜ) abfallende Spannung an den Minus-Eingang des Operationsverstärkers (OPAMPₗᵢₙ) gekoppelt ist;
beinhaltend folgende Schritte:
- Koppeln der Strecke Arbeitselektrode-Bezugselektrode eines ersten analog betreibbaren Transistors (T_{lin,1}), der eine Steuerelektrode, eine Bezugselektrode und eine Arbeitselektrode aufweist, seriell zum ersten und zweiten Anschluss für die erste LED (D1) zwischen einen Anschluss für eine Versorgungsgleichspannung (U_{supply1}; U_{supply2}) und das Bezugspotential;
- Koppeln der Strecke Arbeitselektrode-Bezugselektrode eines zweiten analog betreibbaren Transistors (T_{lin,2}), der eine Steuerelektrode, eine Bezugselektrode und eine Arbeitselektrode aufweist, seriell zum ersten und zweiten Anschluss für die zweite LED (D2) zwischen einen Anschluss für eine Versorgungsgleichspannung (U_{supply1}; U_{supply2}) und das Bezugspotential;
**gekennzeichnet durch** folgende Schritte
- Koppeln eines ersten elektronischen Schalters (S1) seriell zwischen den Ausgang des Operationsverstärkers (OPAMPₗᵢₙ) und die Steuerelektrode des ersten analog betreibbaren Transistors (T_{lin,1}; und
- Koppeln eines zweiten elektronischen Schalters (S2) seriell zwischen den Ausgang des Operationsverstärkers (OPAMPₗᵢₙ) und die Steuerelektrode des zweiten analog betreibbaren Transistors (T_{lin,2}).
- Koppeln des Strommesswiderstands seriell zwischen den Verbindungspunkt (P) der zweiten Anschlüsse und ein Bezugspotential.

## Claims

1. Circuit configuration for operating at least one first (D1) and one second LED (D2), having
- an operational amplifier (OPAMPₗᵢₙ) having a plus and a minus input and an output;
- a device providing a target value (Uᵢₙ) and coupled to the plus input of the operational amplifier (OPAMPₗᵢₙ);
- at least one first and one second connection for the first (D1) and one first and one second connection for the second LED (D2), whereby the respective first connection is coupled to a connection for a DC supply voltage (U_{supply1}; U_{supply2}), whereby the respective second connections are coupled to each other, forming a connection point (P); and
- a first transistor (T_{lin,1}) which can be driven in an analogue manner, having a control electrode, a reference electrode and a working electrode, the working electrode-reference electrode path of which is coupled in series to the first and second connection for the first LED (D1) between a connection for a DC supply voltage (U_{supply1}; U_{supply2}) and the reference potential;
- a second transistor (T_{lin,2}) which can be driven in an analogue manner, having a control electrode, a reference electrode and a working electrode, the working electrode-reference electrode path of which is coupled in series to the first and second connection for the second LED (D2) between a connection for a DC supply voltage (U_{supply1}; U_{supply2}) and the reference potential;
**characterised in that**
the circuit configuration furthermore comprises:
- a first electronic switch (S1) which is coupled in series between the output of the operational amplifier (OPAMPₗᵢₙ) and the control electrode of the first transistor (T_{lin,2}) which can be driven in an analogue manner;
- a second electronic switch (S2) which is coupled in series between the output of the operational amplifier (OPAMPₗᵢₙ) and the control electrode of the second transistor (T_{lin,2}) which can be driven in an analogue manner; and
- a current sensing resistor (Rₛₕᵤₙₜ) coupled in series between the connection point (P) of the second connections and a reference potential, whereby the Voltage drop across the current sensing resistor (Rₛₕᵤₙₜ) is coupled to the minus input of the operational amplifier (OPAMPₗᵢₙ).

2. Circuit configuration according to claim 1,
**characterised in that**
the first LED (D1) is coupled between the reference electrode of the first transistor (T_{lin,1}) which can be driven in an analogue manner and the reference potential and the second LED (D2) is coupled between the reference electrode of the second transistor (T_{lin,2}) which can be driven in an analogue manner and the reference potential.

3. Circuit configuration according to claim 1,
**characterised in that**
the first LED (D1) is coupled between a connection for a supply voltage and the working electrode of the first transistor (T_{lin,1}) which can be driven in an analogue manner and the second LED (D2) is coupled between a connection for a supply voltage and the working electrode of the second transistor (T_{lin,2}) which can be driven in an analogue manner.

4. Circuit configuration according to one of the preceding claims,
**characterised in that**
the first (S1) and/or the second electronic switch (S2) is embodied as a small signal transistor.

5. Circuit configuration according to one of the preceding claims,
**characterised in that**
the first (T_{lin,1}) and/or the second transistor (T_{lin,2}) which can be driven in an analogue manner is embodied as a power transistor.

6. Circuit configuration according to one of the preceding claims,
**characterised in that**
the first (T_{lin,1}) and the second transistor (T_{lin,2}) which can be driven in an analogue manner are mounted spaced apart by more than 2 cm, in particular spaced apart by more than 5 cm.

7. Circuit configuration according to one of the preceding claims,
**characterised in that**
a feedback network (R_{lin,FB}) is coupled between the output and the minus input of the operational amplifier (OPAMPₗᵢₙ).

8. Circuit configuration according to one of the preceding claims,
**characterised in that**
at least two connections (U_{supply}) for connecting a DC supply voltage are coupled to each other.

9. Circuit configuration according to one of the preceding claims,
**characterised in that**
at least two connections for connecting a DC supply voltage (U_{supply1}, U_{supply2}) are not coupled to each other, with the result that they can be coupled to different DC supply voltages (U_{supply1}, U_{supply2}).

10. Circuit configuration according to one of the preceding
claims,
**characterised in that**
the at least one first LED (D1) constitutes a first LED module and the at least one second LED (D2) constitutes a second LED module.

11. Circuit configuration according to claim 10,
**characterised in that**
at least one LED module comprises a plurality of single chips each having at least one LED (D1), which are connected in parallel and/or in series.

12. Method for operating at least one first (D1) and one second LED (D2) in a circuit configuration having an operational amplifier (OPAMPₗᵢₙ) having a plus and a minus input and an output; a device providing a target value (Uᵢₙ) and coupled to the plus input of the operational amplifier (OPAMPₗᵢₙ); at least one first and one second connection for the first (D1) and one first and one second connection for the second LED (D2), whereby the respective first connection is coupled to a connection for a DC supply voltage (U_{supply1}; U_{supply2}), whereby the respective second connections are coupled to each other, forming a connection point (P); and a current sensing resistor (Rₛₕᵤₙₜ), whereby the voltage drop across the current sensing resistor (Rₛₕᵤₙₜ) is coupled to the minus input of the operational amplifier (OPAMPₗᵢₙ); comprising the following steps:
- coupling the working electrode-reference electrode path of a first transistor (T_{lin,1}) which can be driven in an analogue manner, which has a control electrode, a reference electrode and a working electrode, in series to the first and second connection for the first LED (D1) between a connection for a DC supply voltage (U_{supply1}; U_{supply2}) and the reference potential;
- coupling the working electrode-reference electrode path of a second transistor (T_{lin,2}) which can be driven in an analogue manner, which has a control electrode, a reference electrode and a working electrode, in series to the first and second connection for the second LED (D2) between a connection for a DC supply voltage (U_{supply1}; U_{supply2}) and the reference potential,
**characterised by** the following steps
- coupling a first electronic switch (S1) in series between the output of the operational amplifier (OPAMPₗᵢₙ) and the control electrode of the first transistor (T_{lin,1}) which can be driven in an analogue manner;
- coupling a second electronic switch (S2) in series between the output of the operational amplifier (OPAMPₗᵢₙ) and the control electrode of the second transistor (Tₗᵢₙ,₂) which can be driven in an analogue manner; and
- coupling the current sensing resistor (Rₛₕᵤₙₜ) in series between the connection point (P) of the second connections and a reference potential.

## Revendications

1. Agencement de circuit pour faire fonctionner au moins une première (D1) et une deuxième LED (D2), comprenant
- un amplificateur opérationnel (OPAMPₗᵢₙ) avec une entrée plus et une entrée moins ainsi qu'une sortie ;
- un dispositif de prédéfinition de valeur de consigne (Uin), couplé à l'entrée plus de l'amplificateur opérationnel (OPAMPₗᵢₙ) ;
- au moins une première et une deuxième borne pour la première (D1) et une première et une deuxième borne pour la deuxième LED (D2), la première borne respective étant couplée à une borne pour une tension continue d'alimentation (U_{supply1} ; U_{supply2}), les deuxièmes bornes respectives étant couplées entre elles en formant un point de connexion (P) ;
- un premier transistor (T_{lin,1}) apte à fonctionner en analogique comprenant une électrode de commande, une électrode de référence et une électrode de travail, dont le trajet électrode de travail-électrode de référence est couplé en série avec la première et la deuxième borne pour la première LED (D1) entre une borne pour une tension continue d'alimentation (U_{supply1} ; U_{supply2}) et le potentiel de référence ; et
- un deuxième transistor (T_{lin,2}) apte à fonctionner en analogique comprenant une électrode de commande, une électrode de référence et une électrode de travail, dont le trajet électrode de travail-électrode de référence est couplé en série avec la première et la deuxième borne pour la deuxième LED (D2) entre une borne pour une tension continue d'alimentation (U_{supply1} ; U_{supply2}) et le potentiel de référence ;
**caractérisé en ce que** l'agencement de circuit comprend en outré :
- un premier interrupteur électronique (S1), couplé en série entre la sortie de l'amplificateur opérationnel (OPAMPₗᵢₙ) et l'électrode de commande du premier transistor (T_{lin,2}) apte à fonctionner en analogique ;
- un deuxième interrupteur électronique (S2), couplé en série entre la sortie de l'amplificateur opérationnel (OPAMPₗᵢₙ) et l'électrode de commande du deuxième transistor (T_{lin,2}) apte à fonctionner en analogique ; et
- une résistance de mesure de courant (Rₛₕᵤₙₜ), couplée en série entre le point de connexion (P) des deuxièmes bornes et un potentiel de référence, la tension chutant à travers la résistance de mesure de courant (Rₛₕᵤₙₜ) étant couplée à l'entrée moins de l'amplificateur opérationnel (OPAMPₗᵢₙ).

2. Agencement de circuit selon la revendication 1, **caractérisé en ce que** la première LED (D1) est couplée entre l'électrode de référence du premier transistor (T_{lin,1}) apte à fonctionner en analogique et le potentiel de référence et la deuxième LED (D2) entre l'électrode de référence du deuxième transistor (T_{lin,2}) apte à fonctionner en analogique et le potentiel de référence.

3. Agencement de circuit selon la revendication 1, **caractérisé en ce que** la première LED (D1) est couplée entre une borne de tension d'alimentation et l'électrode de travail du premier transistor (T_{lin,1}) apte à fonctionner en analogique et la deuxième LED (D2) entre une borne de tension d'alimentation et l'électrode de travail du deuxième transistor (T_{lin,2}) apte à fonctionner en analogique.

4. Agencement de circuit selon l'une des revendications précédentes,
**caractérisé en ce que** le premier (S1) et/ou le deuxième interrupteur électronique (S2) est réalisé sous forme de transistor de petit signal.

5. Agencement de circuit selon l'une des revendications précédentes,
**caractérisé en ce que** le premier (T_{lin,1}) et/ou le deuxième transistor (T_{lin,2}) apte à fonctionner en analogique est réalisé sous forme de transistor de puissance.

6. Agencement de circuit selon l'une des revendications précédentes,
**caractérisé en ce que** le premier (T_{lin,1}) et le deuxième transistor (T_{lin,2}) aptes à fonctionner en analogique sont montés à une distance spatiale de plus de 2 centimètres, en particulier à une distance de plus de 5 centimètres.

7. Agencement de circuit selon l'une des revendications précédentes,
**caractérisé en ce qu'**entre la sortie et l'entrée - de l'amplificateur opérationnel (OPAMPₗᵢₙ) est couplé un circuit de rétroaction (R_{lin,FB}).

8. Agencement de circuit selon l'une des revendications précédentes,
**caractérisé en ce qu'**au moins deux bornes (U_{supply}) pour brancher une tension continue d'alimentation sont couplées entre elles.

9. Agencement de circuit selon l'une des revendications précédentes,
**caractérisé en ce qu'**au moins deux bornes pour brancher une tension continue d'alimentation (U_{supply1}, U_{supply2}) ne sont pas couplées entre elles, permettant ainsi de les coupler à des tensions continues d'alimentation (U_{supply1}, U_{supply2}) différentes.

10. Agencement de circuit selon l'une des revendications précédentes,
**caractérisé en ce que** la au moins une première LED (D1) représente un premier module LED et la au moins une deuxième LED (D2) un deuxième module LED.

11. Agencement de circuit selon la revendication 10, **caractérisé en ce qu'**au moins un module LED comprend une pluralité de puces individuelles comportant chacune une LED, qui sont montées en parallèle et/ou en série.

12. Procédé pour faire fonctionner au moins une première (D1) et une deuxième LED (D2) sur un agencement de circuit comprenant un amplificateur opérationnel (OPAMPₗᵢₙ) avec une entrée plus et une entrée moins ainsi qu'une sortie ; un dispositif de prédéfinition de valeur de consigne (Uin), couplé à l'entrée plus de l'amplificateur opérationnel (OPAMPₗᵢₙ) ; au moins une première et une deuxième borne pour la première (D1) et une première et une deuxième borne pour la deuxième LED (D2), la première borne respective étant couplée à une borne pour une tension continue d'alimentation (U_{supply1} ; U_{supply2}), les deuxièmes bornes respectives étant couplées entre elles en formant un point de connexion (P) ; et une résistance de mesure de courant (Rₛₕᵤₙₜ), la tension chutant à travers la résistance de mesure de courant (Rₛₕᵤₙₜ) étant couplée à l'entrée moins de l'amplificateur opérationnel (OPAMPₗᵢₙ) ;
comprenant les étapes suivantes :
- coupler en série le trajet électrode de travail-électrode de référence d'un premier transistor (T_{lin,1}) apte à fonctionner en analogique, comprenant une électrode de commande, une électrode de référence et une électrode de travail, avec la première et la deuxième borne pour la première LED (D1) entre une borne pour une tension continue d'alimentation (U_{supply1}, U_{supply2}) et le potentiel de référence ;
- coupler en série le trajet électrode de travail-électrode de référence d'un deuxième transistor (T_{lin,2}) apte à fonctionner en analogique, comprenant une électrode de commande, une électrode de référence et une électrode de travail, avec la première et la deuxième borne pour la deuxième LED (D2) entre une borne pour une tension continue d'alimentation (U_{supply1}, U_{supply2}) et le potentiel de référence ;
**caractérisé par** les étapes suivantes :
- coupler en série un premier interrupteur électronique (S1) entre la sortie de l'amplificateur opérationnel (OPAMPₗᵢₙ) et l'électrode de commande du premier transistor (T_{lin,1}) apte à fonctionner en analogique ; et
- coupler en série un deuxième interrupteur électronique (S2) entre la sortie de l'amplificateur opérationnel (OPAMPₗᵢₙ) et l'électrode de commande du deuxième transistor (T_{lin,2}) apte à fonctionner en analogique ;
- coupler en série la résistance de mesure de courant (Rₛₕᵤₙₜ) entre le point de connexion (P) des deuxièmes bornes et un potentiel de référence.
